# EUROPÄISCHE PATENTSCHRIFT

(11) **EP 1 410 309 B1**
(45) Veröffentlichungstag und Bekanntmachung des Hinweises auf die Patenterteilung: **19.09.2007**
(21) Anmeldenummer: 02735390.3
(22) Anmeldetag: 28.05.2002
(51) Int. Cl.: G06K 7/00, G06K 19/10, G07F 7/08

(54) **HANDPRÜFGERÄT**
HAND-HELD TEST APPARATUS
APPAREIL A MAIN

(30) Priorität: 31.05.2001 DE 10126722
(43) Veröffentlichungstag der Anmeldung: 21.04.2004
(73) Patentinhaber: Giesecke & Devrient GmbH, 81677 München (DE)
(72) Erfinder: STEIDL, Helmut, 81375 München (DE)
(74) Vertreter: Klunker . Schmitt-Nilson . Hirsch
(86) Internationale Anmeldenummer: PCT/EP2002/005867
(87) Internationale Veröffentlichungsnummer: WO 2002/097707

(56) Entgegenhaltungen:
- EP-A- 0 683 471
- WO-A-92/16913
- US-A- 5 984 366
- US-A- 6 076 731
- US-B1- 6 196 460

## Beschreibung

Die Erfindung betrifft ein Handgerät zur Prüfung der Echtheit und/ oder Gültigkeit eines Berechtigungsnachweisobjekts, beispielsweise einer Eintrittskarte, eines Fahrausweises oder dergleichen.

Ein Gerät zum Prüfen der Echtheit von Kreditkarten und anderer zur bargeldlosen Zahlung dienender Karten ist aus der WO 92/16913 A1 bekannt. Das Gerät weist Leseeinrichtungen zum Auslesen von gegebenenfalls mit einer PIN korrelierten Daten aus einem Magnetstreifen und einer nicht sichtbaren Codierung auf.

Aus DE 198 10 817 A1 ist ein stationäres Prüfgerät mit einem ersten und einem zweiten Leser bekannt, bei dem eine Echtheitsinformation aus einem von dem zweiten Leser gelesenen Sicherheitsmerkmal berechnet wird. Das Prüfgerät dient zur Prüfung einer Zugangsberechtigung, wobei die Zugangsberechtigung nur dann gewährt wird, wenn sowohl die Echtheits- als auch die Sicherheitsprüfung ein positives Ergebnis liefert.

Bei den meisten Veranstaltungen, beispielsweise bei Konzerten, im Kino, im Theater oder im Museum wird zur Überprüfung der Eintrittskarten in der Regel Kontrollpersonal eingesetzt, das an den Eingangspforten postiert ist. Das Kontrollpersonal hat die Aufgabe, die Eintrittskarten auf Echtheit und Gültigkeit zu überprüfen und gegebenenfalls zu entwerten. Die Überprüfung auf Echtheit und Gültigkeit erfolgt in den meisten Fällen visuell, d.h. indem die betreffende Kontrollperson die Eintrittskarte auf bestimmte Merkmale wie beispielsweise Größe und Farbe sowie die aufgedruckten Informationen hin überprüft. Bei entsprechendem Personenandrang kann die Überprüfung der Echtheit und Gültigkeit der Tickets dabei nur noch unzureichend ausgeführt werden. Das gleiche Problem besteht beim Kontrollieren von Fahrkarten in öffentlichen Verkehrsmitteln. Das Entwerten der Fahrkarten geht relativ schnell, während das vorherige Überprüfen der Echtheit und der Gültigkeit der Karten die volle Aufmerksamkeit des Kontrollpersonals und außerdem viel Zeit erfordert,

Es ist daher Aufgabe der vorliegenden Erfindung, eine Möglichkeit zu schaffen, die Überprüfung der Echtheit und/ oder der Gültigkeit von derartigen Berechtigungsnachweisobjekten auf einfache und sichere Weise zu automatisieren.

Diese Aufgabe wird durch ein Handgerät gemäß Anspruch 1 gelöst. Weiterbildungen sind Gegenstand der Unteransprüche.

Erfindungsgemäß handelt es sich hierbei um ein Handgerät mit einem Durchzugsleser zum Lesen von in und/ oder auf dem Berechtigungsnachweisobjekt gespeicherten Informationen und/oder Sicherheitsmerkmalen des Berechtigungsnachweisobjekts und mit einer Prüfvorrichtung zur Überprüfung der Echtheit und Gültigkeit des Berechtigungsnachweisobjekts anhand der gelesenen Informationen und/ oder Sicherheitsmerkmale, wobei der Durchzugsleser eine erste Leseeinrichtung zum Lesen einer auf dem Berechtigungsobjekt vorgesehenen Information, eine zweite Leseeinrichtung zum Lesen von Sicherheitsmerkmalen aufweist, und die Prüfeinrichtung aus dem Sicherheitsmerkmal eine Echtheitsinformation berechnet, die anschließend mit der vom Berechtigungsnachweisobjekt gelesenen Information auf Übereinstimmung verglichen wird. Bei einem solchen Gerät wird das Berechtigungsnachweisobjekt von Hand durch den Durchzugsleser gezogen, und die benötigten Informationen bzw. Sicherheitsmerkmale zur Überprüfung der Echtheit und Gültigkeit werden ausgelesen. Da der Transport der Objekte beim Lesen nicht motorisch, sondern von Hand erfolgt, wird hierfür keine Energie benötigt. Lediglich das Auslesen der Informationen bzw. der Merkmale selbst erfordert Energie. Im Gegensatz zum Energiebedarf bei einer motorischen Bewegung des Objekts handelt es sich hier jedoch um einen nur relativ geringen Energiebedarf, der mittels eines Akkus oder einer Batterie im Handgerät problemlos gedeckt werden kann. Das Handgerät ist damit längere Zeit autark und somit äußerst mobil und kann vom Kontrollpersonal an beliebige Orte mitgenommen werden. Gleichzeitig erfolgt die Überprüfung des Berechtigungsnachweisobjekts automatisch, so dass Fälschungsversuche sicher und schnell erkannt werden können. Bei Großveranstaltungen hat dies den zusätzlichen Vorteil, dass sich das Kontrollpersonal auf den automatischen Prüfvorgang verlassen kann und eine zügige Abwicklung der Zugangskontrolle gewährleistet ist.

Der Durchzugsleser weist eine erste Leseeinrichtung zum Lesen einer auf dem Berechtigungsnachweisobjekt vorgesehenen Information sowie eine zweite Leseeinrichtung zum Lesen von Sicherheitsmerkmalen des Berechtigungsnachweisobjekts auf. Das Überprüfen der Echtheit erfolgt beispielsweise, indem beim Durchziehen des Berechtigungsnachweisobjekts durch den Durchzugsleser des Handgeräts sowohl die Information als auch die Sicherheitsmerkmale gelesen werden. Die Prüfungseinrichtung prüft dann, ob die Sicherheitsmerkmale echt sind und ob die richtige Verknüpfung zwischen dem Sicherheitsmerkmal und der Information vorliegt. Ist die Überprüfung erfolgreich, wird somit das Berechtigungsnachweisobjekt als echt anerkannt. Die Echtheit des Berechtigungsnachweisobjekts kann somit "offline" durchgeführt werden.

Zusätzlich zur Echtheit wird die Gültigkeit des Berechtigungsnachweisobjekts überprüft. Dies kann zum Beispiel "online" durch Anfrage an einen Zentralrechner über eine drahtlose Verbindung, beispielsweise per Funk oder Infrarot (zum Beispiel mittels IrDA), aber auch über eine Datenleitung erfolgen, sofern ein solcher Anschluss an eine Datenleitung zur Verfügung steht, Hierzu kann das Handgerät bestimmte Kenndaten des jeweiligen Berechtigungsnachweisobjekts, zum Beispiel eine ID-Nummer, an den Zentralrechner senden, welcher durch einen Rückgriff auf entsprechend gespeicherte Daten überprüft, ob das jeweilige Berechtigungsnachweisobjekt zu diesem Zeitpunkt und/oder für diese Veranstaltung gültig ist. Alternativ kann die Gültigkeit auch durch einen reservierten Teil innerhalb einer Informationsspur, welcher beispielsweise eine Kennung oder ein Datum enthält, offline überprüft werden. Die Gültigkeitsdaten können hierbei verschlüsselt oder unverschlüsselt in der Informationsspur abgespeichert sein. Alternativ kann das Handgerät selbst mit einem Speicher versehen sein, in dem alle für eine bestimmte Veranstaltung oder einen bestimmten Veranstaltungstag oder -zeitraum erforderlichen Gültigkeitsdaten zuvor gespeichert wurden.

Zusätzlich enthält das Handgerät eine Entwertungseinrichtung zum Entwerten des Berechtigungsnachweisobjekts. Hierbei handelt es sich vorteilhafterweise um eine handbetätigte Entwertungseinrichtung. Diese kann Mittel zum Lochen des Berechtigungsnachweisobjekts umfassen, so dass man einem Berechtigungsnachweisobjekt sofort ansehen kann, dass es entwertet ist. Unter dem Begriff "Lochen" ist im Sinne dieser Erfindung auch allgemein ein Einbringen einer Kerbe oder einer Ausnehmung am Rand des Berechtigungsnachweisobjekts zu verstehen.

Vorzugsweise arbeitet die Entwertungseinrichtung so, dass die Information und/ oder die Sicherheitsmerkmale des Berechtigungsnachweisobjekts beim Entwerten verändert oder zerstört werden. Beim Lochen kann dies dadurch erfolgen, dass das jeweilige Loch innerhalb des Bereichs der Information erfolgt und somit die jeweilige Information zerstört bzw. unleserlich wird. Bei Verwendung einer Magnetspur als Information kann zur Entwertung beispielsweise auch die Magnetspur ganz oder abschnittsweise entmagnetisiert oder ummagnetisiert werden.

Das Entwerten erfolgt vorzugsweise innerhalb eines Durchzugschlitzes des Durchzugslesers, wobei sich vorteilhafterweise innerhalb des Durchzugschlitzes ein Anschlagelement befindet, um das Berechtigungsnachweisobjekt zur Entwertung richtig zu positionieren.

Bei dem Berechtigungsnachweisobjekt handelt es sich in den weitaus häufigsten Fällen um ein kartenartiges oder scheinartiges Objekt. Es kann aber auch eine beliebige andere Form aufweisen. Wesentlich ist nur, dass das Berechtigungsnachweisobjekt und das Handgerät so zueinander passend ausgebildet sind, dass das Berechtigungsnachweisobjekt zumindest mit einem Teil, auf dem sich die auszulesenden Informationen befinden, durch den Durchzugsleser gezogen werden kann.

Das kartenförmige Berechtigungsnachweisobjekt weist vorzugsweise ein Sicherheitsmerkmal auf, das aus einem aufgebrachten Code, wie z,B, einen Barcode, oder einer inhärenten Eigenschaft des Berechtigungsnachweisobjekts, wie z.B. den Abmessungen oder der Oberflächenbeschaffenheit, bestehen kann. Vorzugsweise besteht das Sicherheitsmerkmal aus einem Merkmalstoff, wie einem Lumineszenz-, Magnetstoff oder dergleichen, der in Form einer Codierung oder einer anderen Information aufgebracht sein kann.

Zusätzlich weist das Berechtigungsnachweisobjekt eine gespeicherte Information auf, die z.B. in einem Magnetstreifen oder einem integrierten Schaltkreis, wie einem Chip gespeichert sein kann. Sie kann allerdings auch aus einem Aufdruck bestehen. Diese gespeicherte Information ist mit dem Sicherheitsmerkmal korreliert.

Gemäß einer bevorzugten Ausführungsform trägt das Berechtigungsnachweisobjekt ein Sicherheitsmerkmal aus einem Merkmalstoff, der in Form eines Barcodes aufgebracht ist, und einen Magnetstreifen, in welchen die mit dem Sicherheitsmerkmal korrelierte Information gespeichert ist.

Beim Durchzug durch das Handgerät wird der Merkmalstoff von der Prüfvorrichtung erkannt und der dargestellte Barcode gelesen. Handelt es sich um einen Lumineszenzstoff, so erkennt die Prüfvorrichtung diesen Stoff vorzugsweise an der Emissionswellenlänge und wertet anschließend die Verteilung des Lumineszenzstoffs auf dem Berechtigungsnachweisobjekt aus. Diese gelesene Echtheitsinformation wird gemäß eines vorgegebenen Algorithmus verschlüsselt. Anschließend vergleicht die Prüfvorrichtung die neu berechnete verschlüsselte Information mit der im Magnetstreifen gespeicherten Information. Bei Übereinstimmung ist das Berechtigungsnachweisobjekt echt und das Handgerät zeigt dies durch ein entsprechendes Signal an. Stimmen die Informationen nicht überein oder kann die Prüfvorrichtung den Merkmalstoff nicht erkennen, so zeigt das Handgerät auch dies durch ein entsprechendes Signal an.

Das Handgerät wird im Folgenden unter Hinweis auf die beigefügten Figuren anhand eines Ausführungsbeispiels näher erläutert. Es stellen dar:
- Figur 1: eine perspektivische Außenansicht eines erfindungsgemäßen Handgeräts,
- Figur 2: eine Draufsicht auf eine Stirnfläche des Handgeräts gemäß Figur 1, von der Lese-Durchzugsrichtung aus gesehen,
- Figur 3: einen Längsschnitt durch das Handgerät entlang der Schnittlinie A-A' gemäß Figur 2,
- Figur 4: eine Draufsicht auf die obere Kante des in Lese-Durchzugsrichtung hinteren Teils des Endgeräts gemäß den Figuren 1, 2 und 3,
- Figur 5: eine vergrößerte Detailansicht des Ausschnitts B in Figur 2,
- Figur 6: eine Draufsicht auf ein Berechtigungsnachweisobjekt im Chipkartenformat gemäß einem ersten Ausführungsbeispiel,
- Figur 7: eine Draufsicht auf ein Berechtigungsnachweisobjekt im Chipkartenformat gemäß einem zweiten Ausführungsbeispiel,
- Figur 8: eine schematische Darstellung der Anwendung des Handgeräts gemäß den Figuren 1 bis 5 mit einem Berechtigungsnachweisobjekt gemäß Figur 6 oder Figur 7.

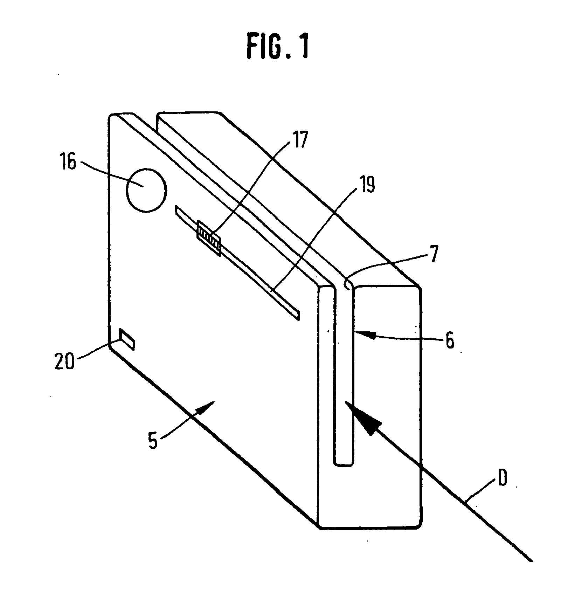

Das in Figur 1 dargestellte Ausführungsbeispiel des erfindungsgemäßen Handgeräts 5 weist ein im Wesentlichen quaderförmiges Gehäuse mit einem integrierten Durchzugsleser 6 auf. Hierzu befindet sich im Gehäuse des Handgeräts 5 entlang einer Längskante ein Durchzugschlitz 7, welcher sich in der Tiefe über ca. 2/3 des Gehäuses erstreckt.

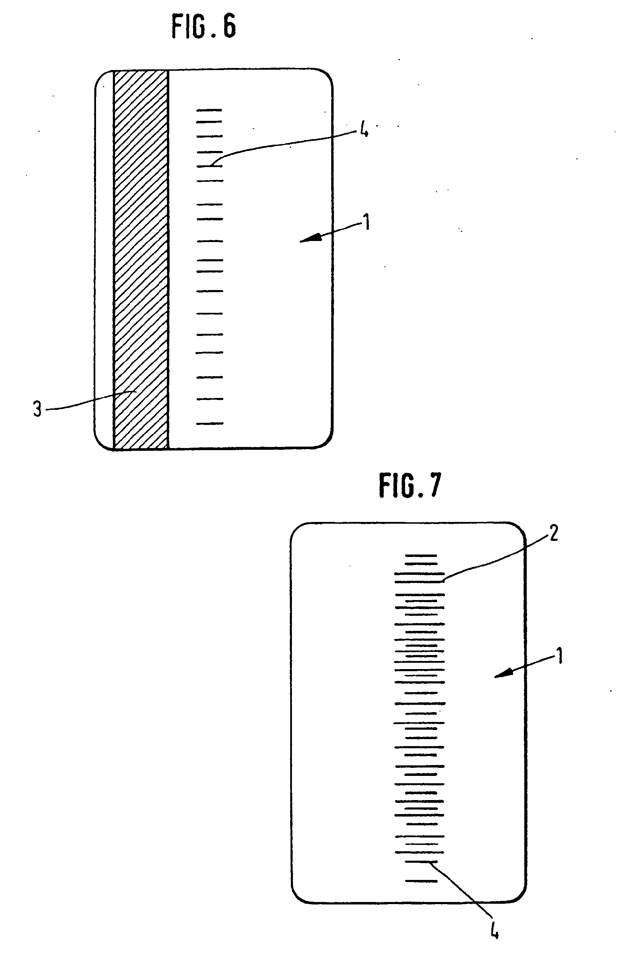

Dieses Handgerät 5 ist zum Überprüfen von kartenförmigen Eintrittskarten oder Fahrtausweisen ausgebildet, wie sie in den Figuren 6 und 7 schematisch dargestellt sind. Im Folgenden werden diese kartenförmigen Eintrittskarten und Fahrtausweise kurz Ausweiskarten 1 genannt, Bei beiden in den Figuren 6 und 7 dargestellten Ausweiskarten 1 befindet sich jeweils auf einer Seite der Ausweiskarte 1 mittig entlang der Längsachse ein für das Auge nicht sichtbares Sicherheitsmerkmal in Form einer Sicherheitsspur 4, welche Informationen zur Überprüfung der Echtheit der Ausweiskarte 1 enthält, Außerdem weisen beide Karten jeweils eine sichtbare Informationsspur 2, 3 auf, in der Informationen gespeichert sind, mit denen beispielsweise durch Vergleich mit den Merkmalen in der Sicherheitsspur 4 die Echtheit überprüft wird und welche genauere Informationen über die Gültigkeit der Ausweiskarte 1 und/ oder Identifizierungsdaten der Ausweiskarte 1 enthält. Bei dem Ausführungsbeispiel gemäß Figur 6 ist diese Informationsspur 3 in Form einer Magnetspur 3 aufgebracht, welche parallel zur Sicherheitsspur 4 nahe einer Randkante der Karte 1 verläuft. Bei dem Ausführungsbeispiel gemäß Figur 7 handelt es sich bei der Informationsspur 2 um einen Bar-Code 2, welcher ebenfalls entlang der Mittellinie auf der Ausweiskarte 1 aufgedruckt ist. Die geheime Sicherheitsspur 4 und der Bar-Code 2 liegen hierbei übereinander, wobei darauf geachtet ist, dass die Sicherheitsspur 4 innerhalb des Bar-Codes 2 auch ausgelesen werden kann.

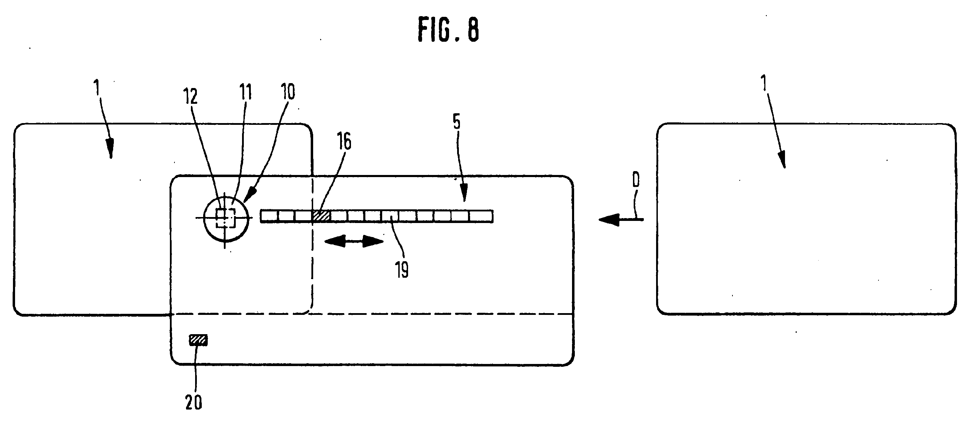

Zum Auslesen der Informationsspur 2, 3 und der Sicherheitsspur 4 wird die Ausweiskarte 1 mit einer bestimmten Orientierung in einer Lese-Durchzugsrichtung D, wie in den Figuren 1 und 8 dargestellt, durch den Durchzugschlitz 7 des im Handgerät 5 integrierten Durchzugslesers 6 gezogen, wobei gleichzeitig die Informationsspur 2, 3 und die Sicherheitsspur 4 ausgelesen werden.

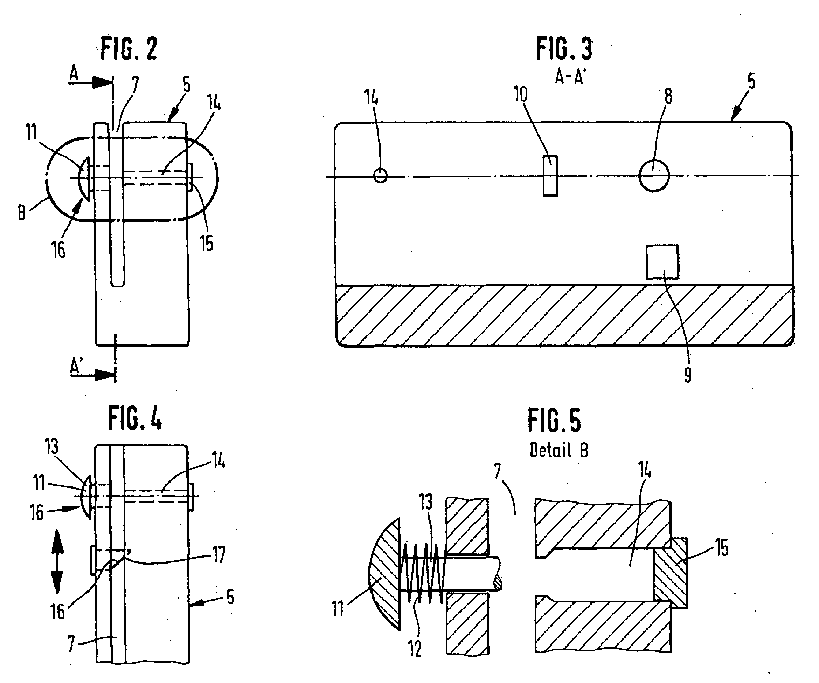

Wie in der Figur 3 dargestellt, befinden sich hierzu im Innern des Handgeräts 5 an den entsprechenden Positionen innerhalb des Durchzugslesers 6 eine Leseeinrichtung 10 zum Auslesen der Sicherheitsspur 4 sowie weitere Leseeinrichtungen 8, 9 zum Auslesen des Bar-Codes 2 und zum Auslesen einer Magnetspur 3.

Das in den Figuren dargestellte Gerät ist somit in der Lage, alternativ Ausweiskarten gemäß Figur 6 oder Figur 7 zu lesen. Ein einfacher aufgebautes Gerät könnte alternativ nur entweder die Leseeinrichtung 8 für den Bar-Code oder die Leseeinrichtung 9 für die Magnetspur aufweisen, wobei dann dementsprechend entweder nur eine Ausweiskarte gemäß Figur 6 oder nur eine Ausweiskarte gemäß Figur 7 gelesen werden könnte. Ebenso können die Leseeinrichtungen 8, 9, 10 auch an anderen Positionen innerhalb des Durchzugslesers 6 angeordnet sein, wenn sich entsprechend die auszulesenden Spuren 2, 3, 4 auf der Ausweiskarte 1 an anderen Positionen befinden. Entscheidend ist lediglich, dass bei einem Durchziehen der Ausweiskarte 1 durch den Durchzugschlitz 7 des Durchzugslesers 6 die jeweilige Leseeinrichtung 8, 9, 10 mit der zugehörigen Informations- bzw. Sicherheitsspur 2, 3, 4 zur Deckung kommt, sofern die Ausweiskarte 1 beim Durchziehen mit einer vorgegebenen Längskante am Grund des Durchzugschlitzes 7 anliegt.

Die ausgelesenen Daten aus der Sicherheitsspur 4 und aus der Informationsspur 2, 3 werden miteinander verknüpft, um zu überprüfen, ob die jeweilige Ausweiskarte 1 echt ist. Führt diese Verknüpfung zwischen bestimmten in der Informationsspur 2, 3 enthaltenen Informationen mit der ausgelesenen Sicherheitsspur 4 zum richtigen Ergebnis, so wird die Ausweiskarte 1 als echt bewertet. Zusätzlich zur Echtheit überprüft das Handgerät 5 die Gültigkeit der Ausweiskarte 1. Dies erfolgt dadurch, dass beispielsweise die Gültigkeitsdaten in einem reservierten Bereich der Informationsspur 2, 3 eingetragen sind und vom Handgerät 5 ausgelesen werden. Diese Gültigkeitsdaten werden dann unmittelbar offline im Handgerät 5 überprüft. Bei diesen Gültigkeitsdaten handelt es sich zum Beispiel um eine Kennung, beispielsweise eine Seriennummer der Ausweiskarte und um ein Datum. Sowohl die zulässigen Seriennummern als auch das gültige Datum sind zuvor im Handgerät 5 in einem Speicher eingespeichert worden.

Hierzu weist das Handgerät eine Rechen- und Steuereinheit auf, welche auf die gespeicherten Daten zugreift und die verschiedenen Leseeinrichtungen 8, 9, 10 ansteuert und die Daten von dort übernimmt. In dieser Rechen- und Steuerungseinheit werden auch die zur Überprüfung erforderlichen Rechen- und Verschlüsselungs- bzw. Entschlüsselungsalgorithmen durchgeführt. Diese Rechen- und Steuerungseinheit kann beispielsweise in Form eines Mikrocontrollers realisiert sein. Die Programmierung des Mikrocontrollers und insbesondere auch die Einspeicherung der aktuellen Daten, die zur Überprüfung der Gültigkeit der Ausweiskarten 1 benötigt werden, können über eine Schnittstelle, beispielsweise über einen PC oder eine ähnliche Programmiereinrichtung zuvor eingegeben werden. Dabei kann es sich sowohl um eine drahtlose als auch um eine leitungsgebundene Schnittstelle handeln. (Der Speicher, die Rechen- und Steuereinheit und die Schnittstelle sind in den Figuren nicht dargestellt.) Alternativ ist es auch möglich, dass das Handgerät selbst mit einer Bedieneinrichtung, beispielsweise einer kleinen Tastatur und einem Display ausgestattet ist.

Nach erfolgreicher Überprüfung der Echtheit und der Gültigkeit der Ausweiskarte 1 wird dies dem Kontrollpersonal mittels einer Signaleinrichtung 19, hier einer LED, mitgeteilt. Alternativ zu einer solchen optischen Signaleinrichtung kann die Signalisierung auch mittels eines akustischen Signals, beispielsweise eines Pieptons erfolgen.

Das erfindungsgemäße Handgerät gemäß dem vorliegenden Ausführungsbeispiel weist zusätzlich eine Entwertungseinrichtung 16 zum Entwerten einer Ausweiskarte 1 auf. Diese Entwertungseinrichtung 16 ist bezüglich ihrer Position am Handgerät 5 in den Figuren 1, 2, 4 und 8 erkennbar. Eine vergrößerte, detaillierte Darstellung dieser Entwertungseinrichtung 16 zeigt Figur 5.

Es handelt sich hierbei um einen, im vorliegenden Ausführungsbeispiel rechteckigen Stanzbolzen 13, mit dem in eine im Durchzugschlitz 7 befindliche Ausweiskarte 1 ein Loch gestanzt werden kann. Dieser Stanzbolzen 13 ist dazu in einem senkrecht zur Lese-Durchzugsebene des Durchzugschlitzes 7 nach außen durchgehenden, entsprechend rechteckig geformten Durchbruch im Gehäuse verschiebbar gelagert. An seinem äußeren Ende weist der Stanzbolzen 13 eine breite Kopffläche 11 auf. Über eine Druckfeder 12, welche an der Außenseite des Gehäuses des Handgeräts 5 und an der zum Stanzbolzen 13 weisenden Unterseite der Kopffläche 11 fixiert ist, wird der Stanzbolzen 13 in der Ruhelage in einer Position gehalten, so dass der Durchzugschlitz 7 für eine Ausweiskarte 1 frei durchgängig ist. Durch Drücken auf die Kopffläche 11 des Stanzbolzens 13 kann der Stanzbolzen 13 entgegen der Federkraft soweit in den Durchzugschlitz 7 hineingeschoben werden, dass er in eine koaxial zum Stanzbolzen 13 auf der anderen Seite des Durchzugschlitzes 7 angeordnete Öffnung eingreift und dabei ein entsprechendes Loch in eine sich im Durchzugschlitz 7 befindliche Ausweiskarte 1 stanzt. An die dem Stanzbolzen 13 gegenüberliegende koaxiale Öffnung schließt sich eine Sammelkammer 14 an, in der das ausgestanzte Material gesammelt wird, so dass es nicht auf den Boden fällt. Diese Sammelkammer 14 ist mit einem Stopfen 15 verschlossen und kann durch Entfernen des Stopfens 15 entleert werden.

Anstelle einer Fixierung der Feder 12 an der Unterseite der Kopffläche 11 des Stanzbolzens 13 und der Außenseite des Gehäuses des Handgeräts 5 ist es auch möglich, am Stanzbolzen 13 selbst und im Durchbruch, in dem der Stanzbolzen 13 gelagert ist, Anschläge oder dergleichen anzubringen, die ein Herausfallen des Stanzbolzens 13 aus dem Gehäuse des Handgeräts 5 verhindern. In diesem Fall kann eine normale Druckfeder verwendet werden.

Wie aus den Figuren zu ersehen ist, ist die Entwertungseinrichtung 16 so angeordnet, dass der Stanzbolzen 13 bezüglich des Grunds des Durchzugschlitzes 7 in gleicher Höhe liegt wie die Leseeinrichtung 10 zum Lesen der Sicherheitsspur 4. Bei geeigneter Positionierung der Ausweiskarte 1 im Durchzugschlitz 7 wird daher automatisch von dem Stanzbolzen 13 ein Stück aus der Sicherheitsspur 4 ausgestanzt. Damit wird die Ausweiskarte 1 nicht nur optisch erkennbar entwertet, sondern auch so entwertet, dass eine zukünftige Überprüfung der Echtheit der Ausweiskarte 1 fehlschlägt, auch wenn versucht wurde, das ausgestanzte Loch wieder zu schließen.

Damit das Loch automatisch an der richtigen Position entlang der Sicherheitsspur 4 eingestanzt wird, weist das Handgerät 5 außerdem ein Anschlagelement 17 auf. Bei dem gezeigten Ausführungsbeispiel handelt es sich bei dem Anschlagelement 17 um eine Art Blattfeder, welche eine schräg in der Lese-Durchzugsrichtung D verlaufende Auflaufschräge 18 aufweist. Wird eine Ausweiskarte 1 in der Lese-Durchzugsrichtung D durch den Durchzugschlitz 7 gezogen, so läuft die Ausweiskarte 1 mit ihrer Vorderkante an der Auflaufschräge 18 auf, wodurch das federnd ausgebildete Anschlagelement 17 zur Seite gedrückt wird und die Ausweiskarte 1 passieren lässt. Wird die Ausweiskarte 1 entgegen der Lese-Durchzugsrichtung D in den Durchzugschlitz 7 zurückgeschoben, so blockiert das Anschlagelement 17 den Weg, und die Ausweiskarte 1 wird in einer genau definierten Position gestoppt.

Das Anschlagelement 17 ist entlang des Durchzugschlitzes 7 verstellbar am Handgerät 5 angeordnet, um die Position des Lochs beim Entwerten variieren zu können. Im vorliegenden Fall ist das Anschlagelement 17 in einem parallel zur Lese-Durchzugsrichtung D verlaufenden Längsschlitz 19 gelagert und kann dort an einer beliebigen Position fixiert werden.

Anstelle des gezeigten Anschlagelements 17 nach Art einer Blattfeder kann auch eine beliebige andere Konstruktion gewählt werden, die die Ausweiskarte 1 in der Lese-Durchzugsrichtung D durchlässt und in der anderen Richtung blockiert. Beispielsweise könnte ein stirnseitig angeschrägter, federnd gelagerter Bolzen verwendet werden.

Bei einem weiteren Ausführungsbeispiel werden die Handgeräte innerhalb eines mobilen Zugangskontrollsystems verwendet. Hierbei befindet sich beispielsweise in einem Fahrzeug eine Zentrale, die mit den Handgeräten in Funkkontakt treten kann. An den Eingängen zu der Veranstaltung sind Kontrolleure mit den erfindungsgemäßen Handgeräten postiert. Die Kontrolleure prüfen die Tickets, wobei die Echtheit offline im Gerät geprüft und die Gültigkeit online über ein eingebautes Funkmodem von der mobilen Zentrale abgefragt wird.

Zur Energieversorgung der verschiedenen Leseeinrichtungen 8, 9, 10, der Signalisierungseinrichtung 20, der Rechen- und Steuereinheit sowie des Speichers und anderer zusätzlicher Komponenten, wie beispielsweise einer Sende-/Empfangseinrichtung, einer Uhr oder dergleichen, weist das Gerät eine Batterie oder einen Akku auf (nicht dargestellt). Um die Standzeit des Handgeräts 5, d.h. die Zeit, ohne dass ein Austausch der Batterie oder ein Aufladen des Akkus notwendig ist, zu verlängern, kann das Gerät außerdem eine geeignete Einrichtung zur Energieerzeugung aufweisen, Möglich ist beispielsweise der Einsatz einer Solarzelleneinheit oder einer mechanischen Einrichtung, mit der beim Durchziehen einer Karte Energie erzeugt und einem Akku zugeführt wird.

Da das Gerät keine motorisch bewegten Teile aufweist und somit alle mechanischen Funktionen mit einem höheren Energiebedarf, wie das Durchziehen einer Ausweiskarte 1 durch den Durchzugleser 6 oder das Entwerten der Ausweiskarte 1, von Hand erfolgen, ist der Energiebedarf des Handgeräts 5 insgesamt äußerst gering, so dass das Handgerät 5 auch über längere Zeit autark und völlig unabhängig vom jeweiligen Standort verwendet werden kann. Es zeichnet sich insbesondere durch eine geringe Größe - beispielsweise im "Westentaschenformat" - und eine einfache und handliche Bedienung aus, die ein schnelles und sicheres Überprüfen der Ausweiskarten auch unter erschwerten Bedingungen, d.h in kürzester Zeit bei großem Andrang, erlaubt.

## Patentansprüche

1. Handgerät (5) zur Prüfung der Echtheit und der Gültigkeit eines Berechtigungsnachweisobjekts (1) mit einem Durchzugsleser (6) zum Lesen von auf und/ oder in dem Berechtigungsnachweisobjekt (1) gespeicherten Informationen und/oder Sicherheitsmerkmalen eines Berechtigungsnachweisobjekts (1) und mit einer Prüfvorrichtung zur Überprüfung der Echtheit und der Gültigkeit des Berechtigungsnachweisobjekts anhand der gelesenen Informationen und/ oder Sicherheitsmerkmale, wobei der Durchzugsleser eine erste Leseeinrichtung zum Lesen einer auf dem Berechtigungsnachweisobjekt vorgesehenen Information und eine zweite Leseeinrichtung zum Lesen von Sicherheitsmerkmalen aufweist, **dadurch gekennzeichet dass** die Prüfeinrichtung aus dem Sicherheitsmerkmal eine Echtheitsinformation berechnet, die anschließend mit der vom Berechtigungsnachweisobjekt gelesenen Information auf Übereinstimmung verglichen wird, und, dass das Handgerät eine Entwertungseinrichtung (16) zum Entwerten des Berechügungsnachweisobjekts (1) aufweist.

2. Handgerät nach Anspruch 1, **dadurch gekennzeichnet, dass** der Durchzugsleser (6) eine erste Leseeinrichtung (8, 9) zum Lesen einer auf dem Berechtigungsnachweisobjekt (1) gespeicherten Informationsspur (2, 3) und eine zweite Leseeinrichtung (10) zum Lesen eines Sicherheitsmerkmals (4) des Berechtigungsnachweisobjekts (1) aufweist.

3. Handgerät nach Anspruch 1 oder 2, **dadurch gekennzeichnet, dass** die Entwertungseinrichtung (16) Mittel (13) zum Lochen des Berechtigungsnachweisobjekts (1) umfasst.

4. Handgerät nach einem der Ansprüche 1 bis 3, **dadurch gekennzeichnet, dass** die Entwertungseinrichtung (16) Mittel (13) zum Verändern und/ oder Zerstören der Informationsspur (2,3) und/ oder des Sicherheitsmerkmals (4) umfasst.

5. Handgerät nach einem der Ansprüche 1 bis 5, **dadurch gekennzeichnet, dass** die Entwertungseinrichtung (16) so vorgesehen ist, dass sich das Berechtigungsnachweisobjekt (1) bei einer Entwertung zumindest teilweise in einem Durchzugschlitz (7) des Durchzugslesers (6) befinden muss.

6. Handgerät nach Anspruch 5, **gekennzeichnet durch** ein Anschlagelement (17) zum Positionieren des Berechtigungsnachweisobjekts (1) im Durchzugschlitz (7) beim Entwerten.

7. Handgerät nach Anspruch 6, **dadurch gekennzeichnet, dass** das Anschlagelement (17) entlang des Durchzugschlitz (7) verstellbar am Handgerät (5) angeordnet ist.

8. Handgerät nach Anspruch 6 oder 7, **dadurch gekennzeichnet, dass** das Anschlagelement (17) derart vorgesehen ist, dass ein in einer Lese-Durchzugsrichtung (D) durch den Durchzugschlitz (7) gezogenes Berechtigungsnachweisobjekt (1) das Anschlagelement (17) passiert und ein entgegen der Lese-Durchzugsrichtung (D) in den Durchzugschlitz (7) geschobenes Berechtigungsnachweisobjekt (1) am Anschlagelement (16) gestoppt wird.

9. Handgerät nach Anspruch 8, **dadurch gekennzeichnet, dass** das Anschlagelement (17) federnd gelagert und/ oder zumindest teilweise federnd ausgebildet ist.

10. Handgerät nach Anspruch 8 oder 9, **dadurch gekennzeichnet, dass** das Anschlagelement (17) im Bereich des Durchzugschlitzes (7) eine schräg in Lese-Durchzugsrichtung (D) verlaufende Auflaufschräge (18) aufweist.

11. Handgerät nach wenigstens einem der Ansprüche 3 bis 10, **gekennzeichnet durch** eine Sammelkammer (14) für beim Lochen aus dem Berechtigungsnachweisobjekt (1) ausgenommenes Material.

12. Handgerät nach wenigstens einem der Ansprüche 1 bis 11, **gekennzeichnet durch** eine Signalisierungseinrichtung (20) zur Anzeige eines Prüfungsergebnisses einer Prüfung eines Berechtigungsnachweisobjekts (1) auf Echtheit und/ oder Gültigkeit.

## Claims

1. A hand-held unit (5) for checking the authenticity and validity of a credential object (1) having a pull-through reader (6) for reading information stored on and/or in the credential object (1), and/or security features of a credential object (1), and a checking apparatus for checking the authenticity and validity of the credential object with reference to the information and/or security features read, the pull-through reader having a first reading device for reading information provided on the credential object and a second reading device for reading security features, **characterized in that** the checking device calculates authenticity information from the security feature, which is subsequently compared for a match with the information read from the credential object, and the hand-held unit has a cancellation device (16) for canceling the credential object (1).

2. The hand-held unit according to claim 1, **characterized in that** the pull-through reader (6) has a first reading device (8, 9) for reading an information track (2, 3) stored on the credential object (1), and a second reading device (10) for reading a security feature (4) of the credential object (1).

3. The hand-held unit according to claim 1 or 2, **characterized in that** the cancellation device (16) comprises means (13) for perforating the credential object (1).

4. The hand-held unit according to any of claims 1 to 3, **characterized in that** the cancellation device (16) comprises means (13) for changing and/or destroying the information track (2, 3) and/or the security feature (4).

5. The hand-held unit according to any of claims 1 to 5, **characterized in that** the cancellation device (16) is so provided that the credential object (1) must be located at least partly in a pull-through slot (7) of the pull-through reader (6) upon a cancellation.

6. The hand-held unit according to claim 5, **characterized by** a stop element (17) for positioning the credential object (1) in the pull-through slot (7) upon canceling.

7. The hand-held unit according to claim 6, **characterized in that** the stop element (17) is disposed on the hand-held unit (5) adjustably along the pull-through slot (7).

8. The hand-held unit according to claim 6 or 7, **characterized in that** the stop element (17) is so provided that a credential object (1) pulled through the pull-through slot (7) in a reading pull-through direction (D) passes the stop element (17), and a credential object (1) inserted into the pull-through slot (7) contrary to the reading pull-through direction (D) is stopped on the stop element (16).

9. The hand-held unit according to claim 8, **characterized in that** the stop element (17) is spring mounted and/or of at least partly resilient form.

10. The hand-held unit according to claim 8 or 9, **characterized in that** the stop element (17) has a ramp (18) extending obliquely in the reading pull-through direction (D) in the area of the pull-through slot (7).

11. The hand-held unit according to at least one of claims 3 to 10, **characterized by** a collecting chamber (14) for material cut out of the credential object (1) upon perforating.

12. The hand-held unit according to at least one of claims 1 to 11, **characterized by** a signaling device (20) for displaying a check result of a check of a credential object (1) for authenticity and/or validity.

## Revendications

1. Appareil à main (5) pour le contrôle de l'authenticité et de la validité d'un objet de vérification d'identité d'autorisation (1) avec un lecteur à passage (6) pour lire des informations mémorisées sur et/ou dans l'objet de vérification d'autorisation (1) et/ou des caractéristiques de sécurité d'un objet de vérification d'autorisation (1), et avec un dispositif de contrôle pour la vérification de l'authenticité et de la validité de l'objet de vérification d'autorisation à l'aide des informations et/ou des caractéristiques de sécurité ayant été lues, dans lequel le lecteur à passage présente un premier dispositif de lecture, pour lire une information prévue sur l'objet de vérification d'autorisation, et un deuxième dispositif de lecture, pour lire des caractéristiques de sécurité, **caractérisé en ce que** le dispositif de contrôle, à partir de la caractéristique de sécurité, calcule une information d'authenticité, comparée ensuite à l'information lue de l'objet de vérification d'autorisation pour vérifier s'il y a coïncidence, **en ce que** l'appareil à main présente un dispositif d'oblitération ou dévalorisation (16) pour oblitérer l'objet de vérification d'autorisation (1),

2. Appareil à main selon la revendication 1, **caractérisé en ce que** le lecteur à passage (6) présente un premier dispositif de lecture (8, 9), pour lire une piste d'informations (2, 3) mémorisées sur l'objet de vérification d'autorisation (1), et un deuxième dispositif de lecture (10), pour lire une caractéristique de sécurité (4) de l'objet de vérification d'autorisation (1).

3. Appareil à main selon la revendication 1 ou 2, **caractérisé en ce que** le dispositif d'oblitération ou dévalorisation (16) comprend des moyens (13) pour perforer l'objet de vérification d'autorisation (1).

4. Appareil à main selon l'une des revendications 1 à 3, **caractérisé en ce que** le dispositif d'oblitération ou dévalorisation (16) comprend des moyens (13), pour modifier et/ou détruire la piste d'informations (2, 3) et/ou la caractéristique de sécurité (4).

5. Appareil à main selon l'une des revendications 1 à 5, **caractérisé en ce que** le dispositif d'oblitération ou dévalorisation (16) est prévu de manière que l'objet de vérification d'autorisation (1) doive se trouver au moins partiellement dans une fente de passage (7) du lecteur à passage (6), lorsqu'est effectuée une oblitération ou dévalorisation.

6. Appareil à main selon la revendication 5, **caractérisé par** un élément formant butée (17), servant à positionner l'objet de vérification d'autorisation (1) dans la fente de passage (7) lors de l'oblitération ou dévalorisation.

7. Appareil à main selon la revendication 6, **caractérisé en ce que** l'élément formant butée (17) est disposé de façon réglable sur l'appareil à main (5), le long de la fente de passage (7).

8. Appareil à main selon la revendication 6 ou 7, **caractérisé en ce que** l'élément formant butée (17) est prévu de manière qu'un objet de vérification d'autorisation (1), passé dans une direction de passage en lecture (D) à travers la fente de passage (7), passe par l'élément formant butée (17) et qu'un objet de vérification d'autorisation (1), ayant été poussé dans la fente de passage (7) à l'encontre de la direction de passage en lecture (D), soit stoppé sur l'élément formant butée (16).

9. Appareil à main selon la revendication 8, **caractérisé en ce que** l'élément formant butée (17) est monté de façon élastique et/ou est réalisé de façon au moins partiellement élastique.

10. Appareil à main selon la revendication 8 ou 9, **caractérisé en ce que** l'élément formant butée (17) présente dans la région de la fente de passage (7) une pente de franchissement (18) s'étendant obliquement dans la direction de passage en lecture (D).

11. Appareil à main selon au moins l'une des revendications 3 à 10, **caractérisé par** une chambre de collecte (14) pour le matériau extrait de l'objet de vérification d'autorisation (1) lors du compostage, par perforation.

12. Appareil à main selon au moins l'une des revendications 1 à 11, **caractérisé par** un dispositif de signalisation (20), devant afficher un résultat de contrôle quant à l'authenticité et/ou la validité d'un objet de vérification d'autorisation (1).
